# DEMANDE DE BREVET EUROPEEN

(11) **EP 2 068 538 A2**
(43) Date de publication de la demande: **10.06.2009**
(21) Numéro de dépôt: 08018363.5
(22) Date de dépôt: 08.10.1999
(51) Int. Cl.: H04M 1/247, H04L 12/14, H04L 12/28

(54) **Terminal d'information public**

(30) Priorité: 08.10.1998 FR 9812638
(62) Demande divisionnaire de: 99970534.6
(71) Demandeur: All Net, 75016 Paris (FR)
(72) Inventeur: Allani, Cyrine, New York NY 10028 (US); Allani, Sédrick, 75016 Paris (FR)

(57) **Abrégé**

Equipement de bureautique et de communication (1) conçu pour échanger des informations, notamment des documents ou de la voix, via un ou plusieurs réseaux de communication, pour traiter des informations, notamment des documents, et pour accéder à des ressources disponibles sur un ou plusieurs de ces réseaux de communication. Cet équipement de bureautique et de communication (1), désigné également sous le terme PUBLIDESK (marque déposée en France), est agencé pour être installé dans une cabine téléphonique (CA) existante connectée à l'un des réseaux de communication, en substitution d'un appareil téléphonique équipant initialement cette cabine téléphonique. Il est en outre conçu pour communiquer via le ou les réseaux de communication avec un site serveur central prévu pour gérer un ensemble de tels équipements de bureautique et de communication installés dans un réseau existant de cabines téléphoniques. Utilisation notamment pour offrir un accès à Internet et à des ressources bureautiques à partir d'un parc existant de cabines téléphoniques.

## Description

La présente invention concerne un équipement de bureautique et de communication. Elle concerne également un procédé et un système pour gérer un parc de tels équipements.

On entend ici par équipement de bureautique et de communication un équipement offrant à la fois des fonctions classiques rencontrées dans un bureau tels que le traitement, la visualisation et l'impression de documents, et des fonctions de communication telles que la télécopie, la téléphonie, et l'accès à des réseaux de communication et notamment à Internet.

Entrent plus généralement dans le champ des équipements de bureautique et de communication, des appareils et terminaux combinant des moyens de communication et des moyens de traitement de documents, tels que des ordinateurs personnels, postes informatiques
ou stations de travail, équipés d'un modem connecté à un réseau de communication,

Actuellement, accéder au réseau Internet implique d'utiliser des micro-ordinateurs, qui peuvent être personnels, familiaux, professionnels, ou utilisables dans les cybercafés. On peut également citer les postes de consultation Internet proposés dans des lieux ou organismes publics. Mais une partie importante de la population, notamment les jeunes, les personnes non encore équipées ou en déplacement, se trouve écartée du réseau Internet.

Il existe déjà de nombreux exemples de réalisation de bornes interactives permettant d'accéder à un ou plusieurs services d'information. On peut notamment citer des bornes fournissant des informations de toute nature (plan d'accès, liste d'hôtels, etc...) , des bornes permettant d'acheter des titres de transport, des places de spectacle.

Par ailleurs, des postes d'accès et de consultation (surf) sur Internet sont déjà disponibles dans des cybercafés, des administrations et dans des hôtels. Ces postes sont généralement des micro-ordinateurs reliés en réseau local ou pourvus d'un modem. Leur accès est contrôlé par divers moyens techniques.

On connaît aussi les terminaux Internet «Cyberdeck» de la société PACIFIC DIGITAL TELECOMS. Ces terminaux mettent en oeuvre une interface homme-machine appelée « Cybershell » gravée sur un CD-ROM et permettant une accessibilité aux fonctionnalités de ces terminaux et gérant également des opérations et transactions liées à l'utilisation de cartes à puce et de cartes de paiement. Les fonctionnalités de ce type de terminal incluent notamment des accès au Web, aux messageries électroniques, aux forums de discussion, de la téléphonie, et de la visiophonie sur Internet, et du paiement sécurisé. Ces terminaux sont pourvus de lecteurs de carte universels permettant à la fois des paiements sécurisés avec une carte bancaire et de se connecter à Internet au moyen d'une carte privative. Les cartes privatives peuvent être personnalisées et disposer d'un nombre prédéterminé d'unités, permettant ainsi un contrôle du temps global de connexion. Lorsqu'un utilisateur retire sa carte ou lorsque son crédit est épuisé, la session se termine et le logiciel d'interface se réinitialise.

Plus généralement, les bornes d'accès à Internet disponibles actuellement, si elles procurent effectivement un service d'accès à Internet dans des lieux publics, s'inscrivent cependant dans une logique de simple point d'accès, payant ou non, au Web via un fournisseur d'accès.

Par ailleurs, leur implantation dans des lieux publics
ou privés suppose d'installer une nouvelle ligne de raccordement au réseau téléphonique et de pouvoir établir une connexion à un réseau d'alimentation électrique. Les travaux d'installation et les coûts qui en découlent constituent un obstacle réel au développement de ces bornes d'accès Internet.

Il est à noter que l'on connaît par le document WO9712479 un terminal de communication permettant un accès à des réseaux de communication, notamment Internet, et pouvant être connecté à un réseau téléphonique en remplacement d'un poste téléphonique.

De plus, au delà des besoins précités en matière d'accès aux ressources disponibles sur Internet, il existe également des besoins réels en terme d'accès à des ressources de bureautique et de communication, notamment pour transmettre, traiter et recevoir des documents électroniques et sur support papier. C'est en particulier le cas dans les relations entre les administrations et organismes publics et les administrés ou usagers qui sont fréquemment confrontés à la difficulté de transmettre un document justificatif en temps utile. On peut également citer le cas des personnes en recherche d'emploi qui souhaitent recueillir une liste d'offres d'emploi ou transmettre leur curriculum vitae à des employeurs potentiels.

Il existe certes déjà des équipements de télécopie accessibles au public dans certains lieux publics tels que les aéroports, les gares ou les stations d'autoroute, ces équipements de télécopie sont, parfois couplés ou combinés à des équipements de communication tels que des terminaux vidéotex et des postes téléphoniques. Mais ces équipements existants sont cependant peu répandus dans les lieux de résidence ou de vie, et ne peuvent être considérés comme de véritables équipements bureautiques communicants dans la mesure où, d'une part, ils ne procurent qu'une faible partie des fonctionnalités qu'on est en droit d'attendre d'une installation bureautique, et d'autre part, leur fonction communicante est singulièrement limitée à des opérations de transmission de documents par télécopie, de téléphonie et de consultation de services.

Le but de l'invention est de remédier à cette situation en proposant un nouveau concept d'équipement de bureautique et de communication permettant d'offrir d'office ou à carte un ensemble des fonctionnalités bureautiques usuelles, tout en étant massivement répandu sur l'ensemble du territoire et donc accessible au plus grand nombre dans des lieux ou sites qui jusqu'à présent n'offraient pas de points d'accès à des ressources bureautiques et communicantes.

Cet objectif est atteint avec un équipement de bureautique et de communication comprenant :
- des moyens pour échanger des informations, notamment des documents ou de la voix, via un ou plusieurs réseaux de communication,
- des moyens pour traiter des informations, notamment des documents, et
- des moyens pour accéder à des ressources disponibles sur un ou plusieurs desdits réseaux de communication.

Suivant l'invention, cet équipement de bureautique et de communication est agencé pour être installé dans une cabine téléphonique existante connectée à l'un desdits réseaux de communication, en substitution d'un appareil téléphonique équipant initialement ladite cabine téléphonique, et il comprend en outre des moyens pour communiquer via le ou lesdits réseaux de communication avec un site serveur central comprenant des moyens pour gérer un ensemble de tels équipements de bureautique et de communication installés dans un réseau existant de cabines téléphoniques.

Ainsi, avec les équipements de bureautique et de communication selon l'invention, installés dans des parcs de cabines téléphoniques existants en substitution des publiphones, toute une partie de la population qui n'avait pas un accès direct ou aisé à des outils de communication et de bureautique, ainsi que les personnes en déplacement, vont désormais pouvoir envoyer et recevoir des documents par télécopie, générer, copier, scanner, stocker et imprimer des documents, accéder à des services et ressources sur Internet, envoyer et recevoir des courriers électroniques, et plus généralement communiquer plus facilement par la voie, les données et les images, avec notamment la possibilité de réaliser des visioconférences.

Ces équipements de bureautique et de communication sont également désignés dans la suite sous le terme de PUBLIDESK qui a fait l'objet d'une demande d'enregistrement de marque en France.

Un point fort de ce nouveau type d'équipement de bureautique et de communication réside dans le fait qu'il s'agit de mettre à la disposition de tous de véritables "bureaux publics", en minimisant les frais d'infrastructure puisqu'on utilise les cabines téléphoniques publiques comme sites locaux d'installation de ces équipements de bureautique et de communication qui se trouvent par conséquent avantageusement installés dans les quartiers et lieux de vie au coeur des cités et des villages, à l'image des écrivains publics d'antan.

Par ailleurs, il est important de noter que la présente invention peut avoir un impact économique positif significatif pour les opérateurs de télécommunication exploitant actuellement des cabines téléphoniques, dans la mesure elle permet de donner une nouvelle impulsion au parc existant de cabines téléphoniques publiques dont la fréquentation est en constante décroissance au fur et à mesure du développement du marché des téléphones mobiles.

De plus, un opérateur de télécommunication transformant ainsi son parc de cabines équipées de publiphones en un parc de cabines recevant des équipements de bureautique et de communication, devrait bénéficier d'une image positive auprès du public et de la population en général, dans la mesure il met ainsi en place un service public répondant à des besoins réels et identifiés en communication et multimédia, en mettant à la disposition de tous et notamment des exclus une forme moderne de bureau public offrant une combinaison de services qu'il est actuellement difficile de trouver au coeur des cités et des villages.

Dans une version préférée de l'invention, l'équipement de bureautique et de communication comprend en outre des moyens pour contrôler sélectivement l'accès aux moyens d'échange d'information, aux moyens de traitement et/ou moyens d'accès à des ressources disponibles sur un ou plusieurs desdits réseaux de communication.

Par ailleurs, l'équipement de bureautique et de communication selon invention, comprend de préférence des moyens pour réaliser directement une connexion électrique avec une installation électrique équipant la cabine téléphonique recevant cet équipement de bureautique et de communication, ainsi que des moyens pour réaliser directement une connexion de communication avec une installation de communication équipant cette cabine téléphonique.

Il est également avantageux de prévoir que l'équipement de bureautique et de communication ou PUBLIDESK selon l'invention comprenne en outre des moyens pour réaliser directement une liaison mécanique avec un support mécanique au sein de la cabine téléphonique recevant cet équipement de bureautique et de communication.

Les moyens d'accès à des ressources sur réseau peuvent avantageusement coopérer avec les moyens de gestion centrale et avec les moyens de communication pour fournir un portail d'accès à une pluralité de services, tandis qu'il est de préférence prévu que l'équipement de bureautique et de communication puisse en outre comprendre des moyens pour fournir un service basique de téléphonie, soit via un réseau téléphonique existant tel que le réseau RTC, ou un réseaux numérique à intégration de services (RNIS) ou encore via le réseau Internet (Web-phone).

Dans une configuration particulière d'utilisation, un équipement de bureautique et de communication selon l'invention ou PUBLIDESK peut avantageusement inclure des moyens pour fournir un service d'alimentation en énergie électrique pour des équipements portables informatiques et/ou de télécommunication. L'accès à ce service d'alimentation en énergie électrique peut être conditionné par la détention de droits d'accès contenus par exemple dans une carte à mémoire ou par l'utilisation d'une carte de paiement.

Cette configuration particulière vise principalement mais non limitativement le segment d'utilisateurs constitué par les hommes d'affaires, les commerciaux, les consultants et les professions libérales, pour lesquels cette offre répond à un besoin largement ressenti. Des cabines de ce type pourraient être avantageusement installées au coeur des centres d'affaires, dans les gares et les aéroports.

Dans une autre configuration particulière d'utilisation généralement complémentaire de la configuration précitée, l'équipement de bureautique et de communication selon l'invention peut aussi inclure des moyens pour fournir un service de connexion d'équipements portables informatiques et/ou de télécommunication à un ou plusieurs desdits moyens de communication.

L'accès aux moyens de fourniture d'énergie et de service de connexion peut être contrôlé par exemple par des moyens d'obturation mécanique commandés ou encore électroniquement.

Dans un exemple représentatif d'utilisation, un équipement bureautique selon l'invention ou POBLIDESK est agencé pour procurer un accès sélectif à un ou plusieurs services prédéterminés disponibles sur un ou plusieurs des réseaux de communication à un détenteur d'un support de données portatif, tel qu'une carte à mémoire, contenant des données représentatives de droits d'accès sélectif attribués à ce détenteur.

Suivant un autre aspect de l'invention, il est proposé un procédé pour gérer un ensemble d'équipements de bureautique et de communication selon l'invention, ces équipements de bureautique et de communication étant installés dans des cabines téléphoniques publiques en substitution de publiphones équipant initialement ces cabines, caractérisé en ce qu'il est agencé pour gérer les communications et échanges d'informations impliquant chacun desdits équipements de bureautique et de communication via un ou plusieurs des réseaux de communication.

Ce procédé de gestion peut être avantageusement agencé pour procurer à chacun des équipements de bureautique et de communication un accès à des ressources disponibles sur un ou plusieurs des réseaux de communication, en particulier sur le réseau Internet. On peut aussi prévoir que ce procédé de gestion procure à chacun des équipements de bureautique et de communication un portail d'accès à une pluralité de sites fournisseurs de services, et qu'il puisse gérer une taxation des services de gestion du parc de cabines publiques ainsi équipées, basée par exemple sur une mesure des flux de communication et d'échanges d'information et de données impliquant l'ensemble des équipements de bureautique et de communication installés dans ce parc de cabines publiques.

Suivant encore un autre aspect de l'invention, il est proposé un système pour gérer un ensemble d'équipements de bureautique et de communication selon l'invention, ces équipements de bureautique et de communication étant installés dans un réseau de cabines téléphoniques publiques en substitution de publiphones équipant initialement ces cabines, caractérisé en ce qu'il comprend, en un site de gestion connecté à l'un des réseaux de communication auxquels ce réseau de cabines est connecté, des moyens pour gérer les communications et échanges d'informations impliquant chacun des équipements de bureautique et de communication via un ou plusieurs de ces réseaux de communication.

D'autres particularités et avantages de l'invention apparaitront encore dans la description ci-après. Aux dessins annexés donnés à titre d'exemples non limitatifs:
- la figure 1 illustre une cabine publique de télécommunication équipée d'un équipement de bureautique et de communication selon l'invention ou PUBLIDESK;
- la figure 2 illustre un exemple de connexion d'un équipement de bureautique et de communication selon l'invention dans une cabine téléphonique;
- la figure 3 est un schéma synoptique illustrant un système de gestion d'un parc d'équipements de bureautique et de communication selon l'invention;
- la figure 4 illustre des équipements optionnels d'un équipement de bureautique et de communication selon l'invention;
- la figure 5 illustre un ensemble de fonctionnalités offertes dans un équipement de bureautique et de communication ; et
- la figure 6 illustre un exemple de flux d'informations dans une mise en oeuvre particulière du procédé de gestion selon l'invention.

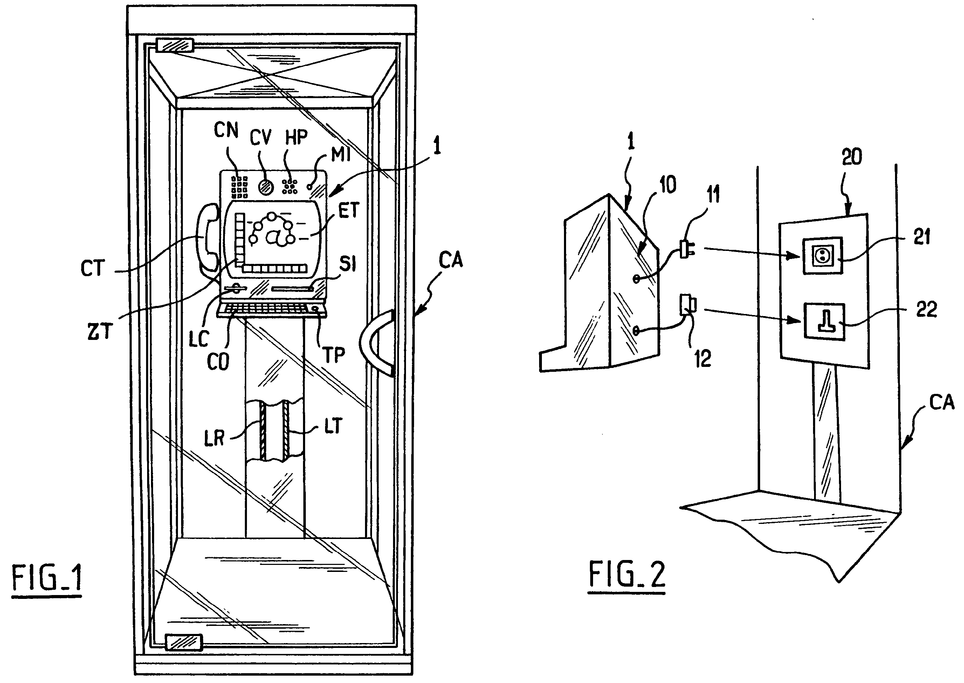

On va maintenant décrire, en référence à la figure 1, un exemple de réalisation d'un équipement de bureautique et de communication selon l'invention ou PUBLIDESK installé dans une cabine publique de télécommunication.

Dans le cadre de la présente invention, on équipe une cabine de télécommunication CA de structure classique, prévue pour recevoir normalement un dispositif de téléphonie, avec un équipement de bureautique et de communication 1 selon l'invention, que l'on fixe par exemple sur une plaque de fixation sur pied technique prévue normalement pour la fixation d'un publiphone.

L'équipement de bureautique et de communication ou PUBLIDESK 1 comporte pour cela une face arrière pourvue d'éléments de fixation conçus et positionnés de façon à permettre un fixation simple et rapide sur la plaque de fixation.

L'équipement de bureautiques et de communication 1, inclus dans un boîtier conçu pour résister aux chocs et aux dégradations, comporte, à titre d'exemple non limitatif, sur sa face avant, un écran de visualisation ET, qui peut être de type conventionnel ou tactile, un clavier CO de type conventionnel ou tactile, un lecteur de carte à puce LC prévu pour contrôler l'accés aux réseaux de communication, une sortie d'imprimante SI, un haut-parleur HP, un équipement de pointage et de sélection TP de type "track pad", un combiné téléphonique CT et un clavier de composition CN.

Il va de soi que de nombreux autres équipements supplémentaires peuvent être prévus peut cet équipement de bureautique et de communication, par exemple une caméra de visioconférence CV, un haut-parleur HP, un microphone MI, ou un clavier tactile ZT intégré à l'écran, ou encore un équipement de numérisation (scanner),

L'équipements de bureautiques et de communication 1 selon l'invention est installé en iieu et place d'un dispositif de téléphonie conventionnel et utilise à ce titre la liaison téléphonique LT et la liaison d'alimentation électrique LR existantes de la cabine hôte CA . Les connexions de l'équipement de bureautique et de communications 1 à un support de base 20 de la cabine publique CA peuvent être réalisèes d'une façon très simple, en référence à la figure 2, en connectant, d'une part, une fiche mâle d'alimentation électrique 11 issue de la face arrière 10 de l'équipement 1 dans une prise d'alimentation électrique 21 prévue sur le support 21 et, d'autre part, un connecteur de télécommunication 12 dans une prise de telécommunication 22 prévue également sur le support, de base 21.

La structure interne de l'équipement de bureautique et de communication 1. inclut une unité de communication reliée par une connectique appropriée au réseau téléphonique publics, et une carte unité centrale de contrôle et de traitement à laquelle sont reliés l'écran tactile ET, le clavier externe CO, le lecteur de carte LC, et l'ensemble des autres périphériques de cet équipement.

La carte unité centrale est pourvue d'une unité de stockage, par exemple du type CD-ROM, prévue pour stocker un logiciel résident ayant les fonctions suivantes:
- gestion des équipements internes de la borne,
- gestion du contrôle d'accès,
- affichage de pages d'accueil.

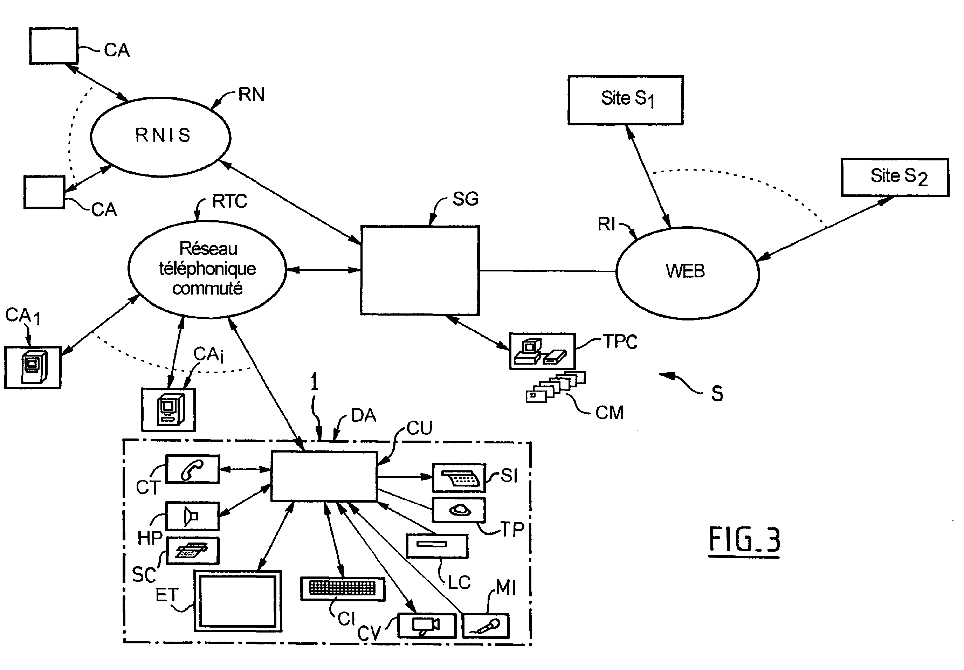

Le système de gestion d'un parc d'équipements de bureautique et de communication S selon l'invention comprend, en référence à la figure 3:
- un serveur dédié SG centralisant l'ensemble des données accessibles depuis les cabines CAl,.., CAi, CA,
- des cartes à puce personnalisées CM contenant par exemple les données suivantes: identifiant, curriculum-vitae dans le cas de chercheurs d'emploi, droits d'accès personnalisés, adresse de courrier électronique,
- un ou plusieurs terminaux TPC de personnalisation de ces cartes.

Les cabines de télécommunication CA selon l'invention peuvent être reliées au serveur de gestion SG soit par un réseau téléphonique commuté RTC, soit par un réseau numérique à intégration de services RN, ou par tout autre type de réseau de communication.

Le serveur de gestion SG est relié à un second réseau de communication RI, par exemple au réseau Internet, auquel des sites S1,.., SN de service tels que des serveurs de sites d'agences pour l'emploi ou des sites d'agence immobilière sont connectés.

On va maintenant décrire un exemple d'utilisation d'un équipement de bureautique et de commutation selon l'invention ou PUBLIDESK installé dans une cabine publique. Un utilisateur est invité par une page d'accueil à accéder au réseau Internet en insérant une carte de transaction CM, par exemple une carte de téléphone, une carte dédiée (emploi, logement, etc...), une carte de paiement, une carte de crédit ou toute autre carte, par exemple une carte multi-service.

Pour les détenteurs de cartes à puce personnalisées, de nombreux types de service peuvent être proposés, parmi lesquels à titre d'exemple non limitatif :
- une carte « demandeur d'emploi », ne donnant accès à son détenteur qu'aux sites contenus dans l'icône « emploi » (par exemple, ANPE, ANPE internationale, APEC, sociétés de travail temporaire) ;
- une carte « étudiant » donnant accès à des informations intéressant le monde étudiant, tels que des résultats à des examens ou des concours, des pré-inscriptions dans des universités, des consultations de programmes d'étude d'universités françaises ou étrangères, ou des consultations d'emploi du temps ;
- une carte « homme d'affaire » permettant d'accéder à des listes hôtels, à des compagnies de transport, ou à des prises encastrées dans la borne selon l'invention pour recharger un ordinateur portable et bénéficier de toutes les fonctionnalités de bureautique (envoi d'une télécopie, envoi et consultation d'un courrier électronique, traitement de texte, tableur, etc..).

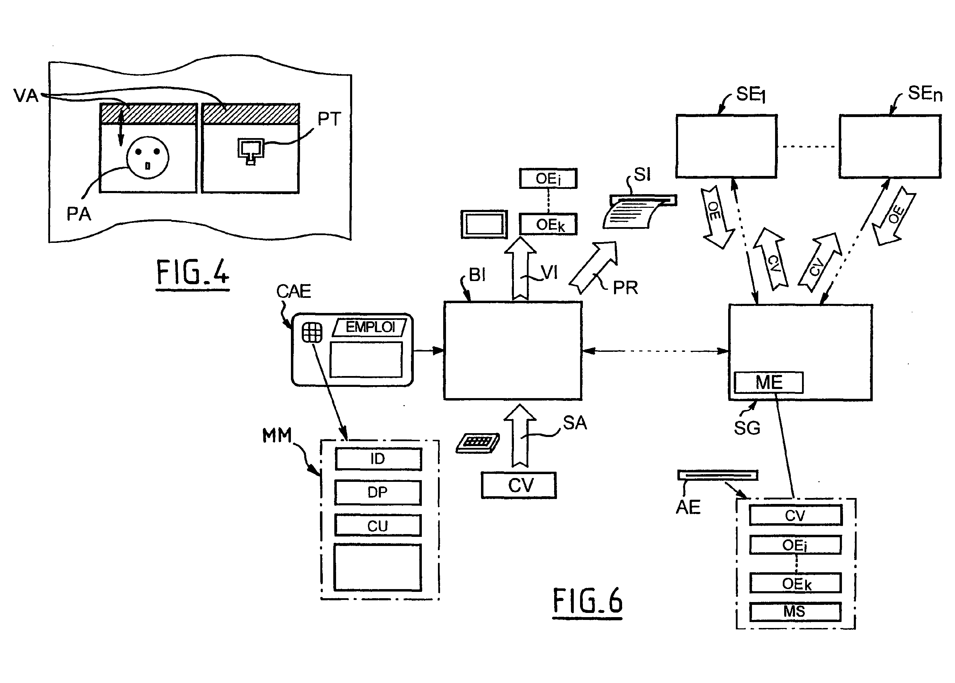

Les cabines de télécommunication équipées d'une version particulière d'un équipement de bureautique et de communication selon l'invention conçue pour offrir ce dernier ensemble de fonctionnalités sont pourvues d'une prise d'alimentation électrique PA et d'une prise de connexion standardisée PT dont l'accès est contrôlé, soit mécaniquement au moyen de volets amovibles VA, soit électroniquement, comme l'illustre la figure 4.

Il est à noter que les types de carte précités offrent à leurs détenteurs la possibilité de créer leurs propres adresses de courrier électronique et de le consulter à tout moment.

Un menu principal proposé par un équipement de bureautique et de communication selon l'invention constitue la première page visible sur l'écran de cette cabine et présente les informations consultables. Dans un souci de clarté et de facilité d'utilisation, ce menu ne doit comporter qu'un nombre limité, par exemple pas plus de douze, d'icônes de titre générique tel que « éducation nationale », « transports », « emplois », « spectacles », « emplois à l'étranger », «universités étrangères », « surfer sur le Web », « shopping ». Ces icônes sont citées à titre d'exemple non limitatif et peuvent être modulées selon le site d'implantation.

On peut aussi prévoir d'afficher un menu déroulant afin de susciter un intérêt chez un utilisateur venu dans un premier temps uniquement pour téléphoner. Le menu principal peut par exemple proposer, au moyen d'icônes, des rubriques génériques telles que celles précitées.

Une fois la carte insérée, l'utilisateur ne peut avoir accès qu'aux sites autorisés par sa carte et est ainsi canalisé dans ses recherches, gagnant ainsi un temps précieux. Selon les droits qui lui ont été attribués, cet utilisateur pourra explorer la totalité d'un site déterminé, surfer sur le Web ou brancher son ordinateur portable et continuer à travailler.

Dans le cas de cabines situées dans des lieux protégés ou semi-protégés, on peut par exemple prévoir un journal cyclique se déroulant lorsque l'équipement de bureautique et de communication est au repos. Les icônes contenues dans le menu principal sont adaptables au site d'accueil de la cabine qui proposera des informations différentes s'il s'agit d'une université, d'une agence pour l'emploi ou d'un café, par exemple, dans une université, un étudiant peut consulter son emploi du temps, choisir ces travaux dirigés pour l'année suivante, consulter ses notes, être en contact avec des universités étrangères afin d'y effectuer une session d'études, avoir accès à des offres d'emploi, jouer, etc.

En particulier, on peut concevoir dans le cadre de la présenter invention une cabine de télécommunication qui serait dédiée à un service particulier, par exemple un service d'offre d'emploi ou d'offre de logement, en plus de la fourniture du service public de téléphonie.

Le logiciel mis en oeuvre dans un équipement de bureautique et de communication selon l'invention permet, à travers une arborescence simple et ludique, un accès rapide aux informations proposées dans les icônes du menu principal. Cet équipement est conçu pour recevoir des télédéchargements et pour participer à des télécollectes automatiques à des heures prédéterminées pour différentes mises à jour sur le site central. Il est également agencé pour gérer des listes d'opposition et de paiement.

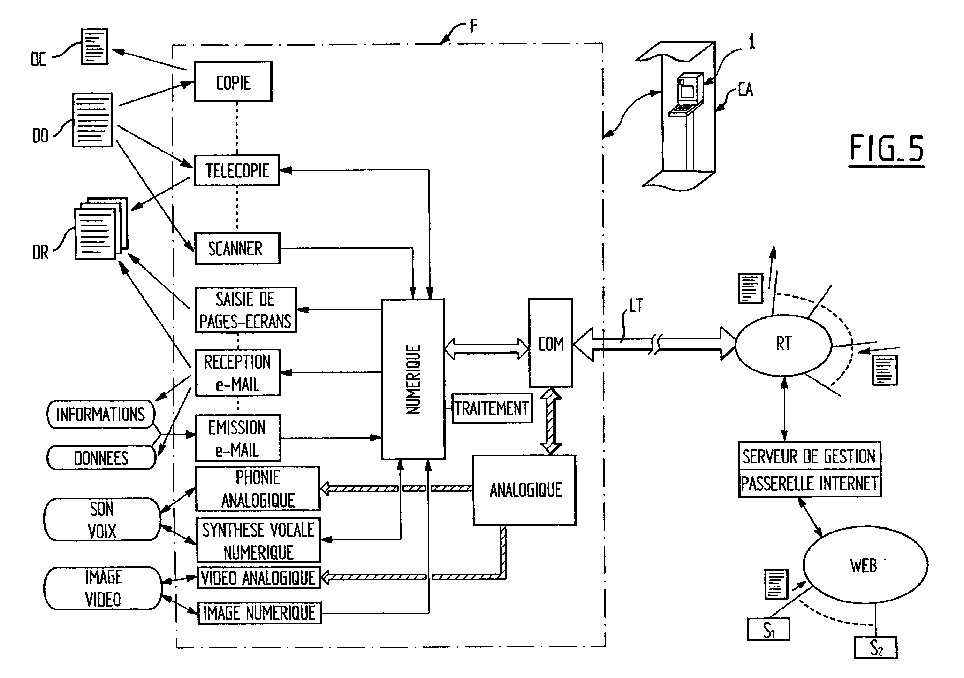

Un équipement de bureautique et de communication 1 selon l'invention ou PUBLIDESK, installé dans une cabine publique CA simplement reliée par une ligne téléphonique LT à un réseau de télécommunication RT, procure, outre les fonctions basiques de téléphonie offertes initialement par les publiphones, un ensemble complet de fonctionnalités bureautiques de traitement de document F, comme l'illustre la figure 5. Il est ainsi possible d'obtenir, à partir d'un document original DO, une copie, DC, une télécopie, une numérisation (scanner), et une transmission par courrier électronique (e-mail) . A l'inverse, l'utilisateur de cet équipement peut recevoir des documents par télécopie, par courrier électronique, et imprimer des pages-écrans consultées lors d'une navigation sur le Web. Outre les documents sous forme papier, l'utilisateur peut également transmettre et recevoir des informations et données sous forme électronique à partir d'un équipement de bureautique et de communication selon l'invention qui est pourvu de moyens de connexion pour un ordinateur ou de moyens de lecture de supports numériques d'informations. Ces informations et données, qui peuvent d'ailleurs être saisies ou complétées en utilisant le clavier de l'équipement de bureautique et de communication, peuvent ensuite être transmises par courrier électronique.

Outre la fonction basique de téléphonie qui est maintenue au sein de l'équipement de bureautique et de communication selon l'invention, des fonctions de transmission numérique du son et de l'image sont offertes aux utilisateurs, notamment pour réaliser des visioconférences.

Selon la nature des documents échangés ou collectés, ceux-ci sous soumis au sein d'un équipement de bureautique et de communication selon l'invention, soit à un traitement de type numérique, soit à un traitement de type analogique, puis sont tous transmis, après passage dans un module de communication, par le canal de la seule liaison de télécommunication LT, soit vers des télécopieurs via un ou plusieurs réseaux de télécommunication, soit vers des sites extérieurs via une passerelle sur le Web, éventuellement contrôlée par le site de gestion. A l'inverse, l'ensemble des documents convergeant vers un équipement de bureautique et de communication, soit sous forme de télécopies, soit sous forme de documents électroniques, entre par le canal de la seule liaison de télécommunication LT puis est traité en interne soit sous forme analogique soit sous forme numérique pour être délivrés par impression ou par affichage sur l'écran.

Le logiciel implémenté dans un équipement de bureautique et de communication selon l'invention peut inclure par exemple un système d'exploitation, un éditeur de texte, un navigateur Internet, un gestionnaire de messagerie électronique Internet, un gestionnaire de télécopie et un module anti-virus.

On peut prévoir un design commun pour l'ensemble des secteurs d'utilisation d'un équipement de bureautique et de communication selon l'invention, modulable selon les besoins: fixation murale, pied technique, équipement de bureautique et de communication posé sur une table, carénages différents selon les lieux d'implantation.

Les secteurs d'activité accessibles depuis une cabine de télécommunication selon l'invention selon l'invention peuvent être diversifiés: emploi, culture, enseignement, santé, tourisme, divertissements, transports,...

L'équipement de bureautique et de communication selon l'invention ou PUBLIDESK doit présenter un encombrement minimal et répondre aux principes généraux des équipements mis à la disposition du public, notamment en termes de clavier étanche, d'écran tactile, d'équipement téléphonique, de matériaux résistants, de signalétique et de design reconnaissable.

On va maintenant décrire, en référence à la figure 6, un exemple non limitatif de mise en oeuvre et d'utilisation d'un équipement de bureautique et de communication selon l'invention installé dans une cabine publique, pour des services de recherche d'emploi.

On considère un utilisateur détenteur d'une carte "emploi" CAE qui lui a été remise par un organisme ou une entreprise. La mémoire MM de cette carte inclut notamment des données ID d'identification du détenteur, des données DP représentatives des droits d'accès associés à cette carte (par exemple, des adresses URL de sites consultables), et un crédit CU d'unités téléphoniques.

La page d'accueil visualisée d'emblée dès utilisation de l'équipement de bureautique et de communication et après insertion de la carte de contrôle d'accès CAE dans le lecteur LC, inclut une icône « emploi ». Par simple pression d'un doigt sur la surface correspondante de l'écran tactile, cet icône s'ouvre et donne accés à une arborescence proposant plusieurs choix.

Par exemple:
Emploi → Apec
   → ANPE
   → Manpower®
   → Adecco®
   → Autres...
(par exemple, possibilité de saisir l'adresse électronique de l'entreprise ou d'être guidé dans ses recherches par des propositions de secteur d'activité, de location, etc..)

L'utilisateur peut également déposer son Curriculum-Vitae on-line par saisie SA sur le clavier tactile de l'équipement de bureautique et de communication, visualiser (VI) sur écran les offres d'emploi pertinentes OEi,..,OEk, imprimer (PR) les adresses des sociétés auquel il a envoyé son CV ainsi que le contenu des annonces. Durant sa navigation depuis la cabine, il a la possibilité de créer son adresse électronique AE pour bénéficier de la messagerie électronique ME afin de consulter ses messages et les réponses à ses demandes d'emploi.

Le serveur de gestion SG conserve pour chaque utilisateur ayant créé une adresse électronique le CV de cet utilisateur, éventuellement les offres d'emploi qu'il a sélectionnées et les messages de réponse MS en provenance des sites d'offre d'emploi ou des employeurs qui ont émis des offres OE.

Plusieurs modes de gestion d'un parc d'équipements de bureautique et de communication selon l'invention peuvent être envisagés dans le cadre de la présente invention.

Dans un premier mode de gestion, un opérateur de télécommunication possédant ou contrôlant un parc existant de cabines téléphoniques acquiert un ensemble d'équipements de bureautique et de communication selon l'invention, les installe dans les cabines téléphoniques en substitution des publiphones, et gère directement ces équipements de bureautique et de communication, en percevant auprès des utilisateurs des droits d'accès aux ressources téléphoniques et informatiques ou en se rémunérant sur les services fournis aux utilisateurs qui ne payent alors que des communications au tarif local ou même peuvent avoir un accès gratuit aux services de téléphonie.

Dans un second mode de gestion, un opérateur de télécommunication possédant ou contrôlant un parc de cabines téléphoniques publiques confie à un exploitant du procédé selon l'invention, l'ensemble des opérations de substitution (désinstallation des publiphones existants, installation et connexion des équipements de bureautique et de communication) , de gestion et de maintenance des équipements, qui sont alors la propriété de l'exploitant ou sont confiés en gestion à celui-ci.

L'opérateur de télécommunication peut être rémunéré d'une part avec les communications générées et payées par les utilisateurs depuis l'ensemble des équipements de bureautique et de communication, et d'autre part, en fonction de l'utilisation des différents périphériques des équipements bureautiques, par exemple en rapport avec le nombre d'impressions réalisées.

L'opérateur peut également être rémunéré avec un pourcentage déterminé des flux financiers générés par l'utilisation des équipements de bureautique et de communication selon l'invention, par exemple sur la base des paiements par les utilisateurs des services fournis, ou encore sur la base de droits de publicité perçus par l'exploitant.

Ce second mode de gestion présente l'avantage pour l'opérateur de télécommunication ne pas nécessiter d'investissement en matériel public nouveau et de dépenses en remplacement, maintenance et entretien, et de ne pas impliquer de responsabilité dans la gestion opérationnelle.

Bien sûr, l'invention n'est pas limitée aux exemples qui viennent d'être décrits et de nombreux aménagements peuvent être apportés à ces exemples sans sortir du cadre de l'invention. Ainsi, les équipements de bureautique et de communication selon l'invention ou PUBLIDESK peuvent présenter des formes extérieures quelconques. Les composants employés pour la réalisation des différentes fonctions de visualisation, de saisie et de communication peuvent bien sûr évoluer au cours du temps au gré des avancées technologiques dans ce domaine. De plus, le champ d'application de la présente invention n'est pas limité à un réseau de communication particulier ou à un parc donné de cabines téléphoniques.

## Revendications

1. Procédé pour procurer à un utilisateur, à partir d'un équipement de bureautique et de communication, un accès à un ou plusieurs services ou ressources disponibles sur un ou plusieurs réseaux de communication,comprenant les étapes suivantes :
- affichage sur un écran dudit équipement de bureautique et de communication d'une page d'accueil stockée dans une unité de stockage au sein dudit équipement de bureautique et de communication, ladite page d'accueil comprenant un menu principal comportant un nombre limité d'icônes de titre générique, au moins une desdites icônes donnant accès à une arborescence proposant plusieurs choix,
- après sélection d'une icône par ledit utilisateur, fourniture audit utilisateur d'un accès au service ou à la ressource distante via le ou les réseaux de communication.

2. Procédé selon la revendication 1, **caractérisé en ce qu'**il est agencé pour procurer un accès sélectif à un ou plusieurs services ou ressources disponibles sur un ou plusieurs réseaux de communication à un utilisateur détenteur d'un support de données portatif contenant des données représentatives de droits d'accès sélectif attribués à ce détenteur.

3. Procédé selon la revendication 2, **caractérisé en ce que** la page d'accueil stockée au sein de l'équipement de bureautique et de communication est agencée pour inviter l'utilisateur à accéder au réseau Internet en insérant le support de données portatif dans un lecteur prévu dans l'équipement de bureautique et de communication, et **en ce qu'**il comprend en outre un traitement des données contenus dans ledit support pour déterminer les ressources ou sites autorisés correspondant aux droits d'accès associés audit support.

4. Equipement de bureautique et de communication (1), mettant en oeuvre le procédé selon l'une des revendications précédentes, comprenant :
- des moyens pour échanger des informations, notamment des données ou de la voix, via un ou plusieurs réseaux de communication,
- des moyens pour traiter des documents émis ou reçus sous forme électronique et/ou papier,
- des moyens pour accéder à des ressources disponibles sur un ou plusieurs desdits réseaux de communication,
- des moyens pour stocker localement des informations, et
- des moyens d'écran pour visualiser des informations,
**caractérisé en ce que** les moyens d'accès à des ressources sur réseau coopèrent avec un serveur de gestion distant, pour fournir un accès à une pluralité de services, via au moins une page d'accueil stockée dans lesdits moyens de stockage local et visualisée sur lesdits moyens d'écran, ladite page d'accueil comprenant un menu principal comportant un nombre limité d'icônes de titre générique.

5. Equipement de bureautique et de communication (1) selon la revendication 4, **caractérisé en ce qu'**il comprend en outre des moyens (LC) pour contrôler sélectivement l'accès aux moyens d'échange d'information, aux moyens de traitement et/ou aux moyens d'accès à des ressources disponibles sur un ou plusieurs desdits réseaux de communication.

6. Equipement de bureautique et de communication selon l'une des revendications 4 ou 5, **caractérisé en ce qu'**il est installé dans une cabine téléphonique publique en substitution d'un publiphone équipant initialement cette cabine.

7. Equipement de bureautique et de communication (1) selon la revendication 6, **caractérisé en ce qu'**il comprend en outre des moyens (11) pour réaliser directement une connexion électrique avec une installation électrique (21) équipant la cabine téléphonique (CA) recevant cet équipement de bureautique et de communication (1).

8. Equipement de bureautique et de communication (1) selon l'une des revendications 6 ou 7, **caractérisé en ce qu'**il comprend en outre des moyens (12) pour réaliser directement une connexion de communication avec une installation de communication (22) équipant la cabine téléphonique (CA) recevant cet équipement de bureautique et de communication (1).

9. Equipement de bureautique et de communication (1) selon l'une quelconque des revendications 6 à 8, **caractérisé en ce qu'**il comprend en outre des moyens pour réaliser directement une liaison mécanique avec un support mécanique au sein de la cabine téléphonique (CA) recevant cet équipement de bureautique et de communication (1).

10. Equipement de bureautique et de communication selon l'une quelconque des revendications 6 à 9, **caractérisé en ce qu'**il comprend en outre des moyens (PA) pour fournir un service d'alimentation en énergie électrique pour des équipements portables informatiques et/ou de télécommunication.

11. Equipement de bureautique et de communication selon l'une quelconque des revendications 6 à 10, **caractérisé en ce qu'**il comprend en outre des moyens (PT) pour fournir un service de connexion d'équipements portables informatiques et/ou de télécommunication à un ou plusieurs desdits moyens de communication.

12. Système (S) pour gérer, depuis un site de gestion, un ensemble d'équipements de bureautique et de communication (1) selon l'une des revendications 4 à 11, installés dans un parc de cabines téléphoniques publiques en substitution de publiphones équipant initialement ces cabines, ce réseau de cabines étant connecté à un ou plusieurs réseaux de communication,
**caractérisé en ce qu'**il comprend :
- des moyens pour procurer à chacun desdits équipements de bureautique et de communication un accès à des ressources disponibles sur un ou plusieurs desdits réseaux de communication, via au moins une page d'accueil stockée dans une unité de stockage au sein de chaque équipement de bureautique et de communication, ladite page d'accueil comprenant un menu principal comportant un nombre limité d'icônes de titre générique, et
- des moyens pour gérer une taxation de services de gestion dudit parc de cabines, basée sur une mesure des flux de communication et d'échanges d'informations et de données relatifs à l'ensemble desdits équipements de bureautique et de communication installés dans ce parc.

13. Procédé pour gérer, depuis un site de gestion, un ensemble d'équipements de bureautique et de communication (1) selon l'une des revendications 4 à 11, installés dans un parc de cabines téléphoniques publiques en substitution de publiphones équipant initialement ces cabines, ce réseau de cabines étant connecté à un ou plusieurs réseaux de communication, ce procédé étant mis en oeuvre dans le système selon la revendication 12, **caractérisé en ce qu'**il est agencé pour :
- procurer à chacun desdits équipements de bureautique et de communication un accès à des ressources disponibles sur un ou plusieurs desdits réseaux de communication, via au moins une page d'accueil stockée dans une unité de stockage au sein de chaque équipement de bureautique et de communication, ladite page d'accueil comprenant un menu principal comportant un nombre limité d'icônes de titre générique, et
- gérer une taxation de services de gestion dudit parc de cabines, basée sur une mesure des flux de communication et d'échanges d'informations et de données relatifs à l'ensemble desdits équipements de bureautique et de communication installés dans ce parc.
